# FASCICULE DE BREVET EUROPEEN

(11) **EP 3 518 679 B1**
(45) Date de publication et mention de la délivrance du brevet: **27.10.2021**
(21) Numéro de dépôt: 17786961.7
(22) Date de dépôt: 28.09.2017
(51) Int. Cl.: A21B 1/24

(54) **MODULE DE CUISSON DE FOUR POUR PRODUITS DE BOULANGERIE, DE VIENNOISERIE ET SIMILAIRES ET FOUR TUNNEL LINEAIRE COMPORTANT AU MOINS UN TEL MODULE**
OFENBACKMODUL FÜR BACKWAREN, PLUNDERGEBÄCK UND ÄHNLICHE PRODUKTE UND LINEARER TUNNELOFEN MIT MINDESTENS EINEM SOLCHEN MODUL
OVEN COOKING MODULE FOR BAKERY, DANISH PASTRY AND SIMILAR PRODUCTS AND LINEAR TUNNEL OVEN COMPRISING AT LEAST ONE SUCH MODULE

(30) Priorité: 30.09.2016 FR 1659431
(43) Date de publication de la demande: 07.08.2019
(73) Titulaire: MECATHERM, 67130 Barembach (FR)
(72) Inventeur: SERGENT, Olivier, 75007 Paris (FR)
(74) Mandataire: Cabinet Bleger-Rhein-Poupon
(86) Numéro de dépôt international: PCT/FR2017/052637
(87) Numéro de publication internationale: WO 2018/060628

(56) Documents cités:
- EP-A1- 1 368 595
- US-A- 4 591 333
- US-A- 4 626 661
- US-A- 6 049 066
- US-A1- 2007 137 633

## Description

L'invention concerne un module de cuisson pour produits de boulangerie, viennoiserie et similaires, comportant une enceinte de cuisson comprenant une voûte et une sole, mobile ou statique, sur laquelle viennent reposer lesdits produits, directement ou indirectement, au travers d'un support de cuisson adapté tel qu'une plaque, un filet, un moule de cuisson ou autre, ledit module étant encore équipé de moyens de chauffage en voûte, ces derniers comprenant un plenum dans lequel circule un fluide caloporteur depuis une entrée vers au moins une sortie.

L'invention concerne encore un four de cuisson pour produits de boulangerie, viennoiserie et similaires comprenant au moins un tel module.

L'invention a trait au domaine des fours de cuisson de produits de boulangerie, viennoiserie et similaires, du type comportant une sole mobile ou statique, sur laquelle reposent, dans un même plan, les produits à cuire ou précuire, soit directement, soit au travers d'une plaque, d'un filet ou d'un moule supportant ou contenant ces produits.

Il existe différents types de four de cuisson de produits de boulangerie, viennoiserie, pâtisserie et similaires répondant à la description ci-dessus, parmi lesquels on distingue essentiellement ceux à sole fixe et ceux à sole mobile.

En somme, un four à sole fixe comporte une enceinte de cuisson comprenant essentiellement une entrée à la fois d'enfournement et de défournement au travers de laquelle les produits peuvent être déposés sur la sole pour en être retirés à l'état cuit ou précuit.

A noter que de tels fours peuvent être conçus à un ou plusieurs étages. Dans ce dernier cas, le four se présente sous forme d'un empilement de plusieurs enceintes de cuisson à chaque fois délimitées par une sole et une voûte et comportant au moins une entrée à la fois d'enfournement et de défournement.

Parmi les fours à sole mobile, on distingue les fours à sole sortante qui, tout en respectant la description précédente comportent une sole susceptible de s'extraire de l'enceinte de cuisson, pour que les produits à cuire puissent y être déposés ou retirés à l'extérieur du four en fin de cuisson.

On connait, par ailleurs, un four dont la sole se présente sous forme d'un tapis mobile à inversion de sens de déplacement selon que les produits sont successivement déposés sur ce tapis pour leur enfournement ou extraits de l'enceinte de cuisson pour les retirer de ce tapis pour leur défournement.

Il est également connu, plus particulièrement, les fours linéaires tunnels pour une cuisson en continu des produits, ces fours comportant au moins une enceinte de cuisson s'étendant horizontalement entre une entrée et une sortie des produits, et délimitée par une voûte et une sole, celle-ci se présentant sous forme d'un tapis mobile.

A ce titre, les tapis mobiles peuvent aller du tapis « plein », constitué de lames de pierre ou de plaques métalliques jointives et articulées entre elles pour constituer, dans le trajet horizontal, une sole de pierre ou métallique pleine et continue, jusqu'à l'extrême inverse, où ce tapis mobile peut comporter un maillage très ouvert, en particulier pour le transport de moules ou de plaques constituant des ensembles lourds, où une convection de sole puissante assure de bonnes performances de cuisson.

Le tapis peut également se présenter sous forme d'une succession de plaques de manière à former une sole et sur lesquelles reposent les produits à cuire.

A noter toutefois qu'un tel four tunnel linéaire peut être à étages et comporter, tout comme précédemment, une superposition d'enceintes de cuisson en forme de tunnel à chaque fois délimitées par une sole et une voûte.

Quoiqu'il en soit, de tels fours selon l'état de la technique exposés plus haut comportent des moyens de chauffage en voûte ainsi que des moyens de chauffage en sole.

De tels moyens de chauffage peuvent être de deux types : moyens de chauffage par convection ou moyens de chauffage par rayonnement, sachant que, dans ce dernier cas, il est connu d'associer des moyens de brassage dans l'enceinte de cuisson.

Le type de chauffage en sole, rayonnement ou convection, va influencer la composition de cette sole, soit sous forme d'un matériau plein ou inversement très ajouré pour favoriser le passage du fluide caloporteur au travers de cette sole lorsqu'un chauffage par convection est recherché.

Les moyens de chauffage en voûte sont généralement du type chauffage par rayonnement. Ainsi, au niveau de cette voûte peuvent être implantées des résistances électriques ou un plenum traversé, depuis une entrée vers une sortie, par un fluide caloporteur pour permettre à ce plenum de rayonner sur les produits à cuire ou à précuire.

Comme indiqué plus haut, des moyens de brassage peuvent être prévus au niveau de l'enceinte de cuisson lorsque les moyens de chauffage en sole et en voûte sont essentiellement du type par rayonnement.

En cas de chauffage convectif, des moyens de circulation de fluide caloporteur assurent l'insufflage de ce dernier dans l'enceinte de cuisson au travers, notamment, de la sole perméable et son extraction depuis cette enceinte de cuisson à l'aide de moyens d'aspiration adaptés.

On connaît également, du document US 4 626 661, un four pour préparation culinaire avec une pluralité de canaux à air connectés à un plenum et un ventilateur pour amener un flux d'air chaud au travers du plenum dans les conduits d'air.

Le conduit d'air en voûte comporte une pluralité d'orifices de soufflage soufflant vers le bas sur des produits se déplaçant dans l'enceinte au travers d'un tapis de transport.

Les orifices de soufflage en voûte peuvent être obturés au moyen d'une plaque de couverture solidarisée sur la plaque munie desdits orifices. La solidarisation s'effectue au moyen d'épingles de verrouillage amovibles, par un assemblage écrou-boulon, empêchant tout mouvement de la plaque de couverture par rapport à la plaque comportant les orifices.

Lorsqu'il est souhaité que les orifices soient à nouveau ouverts, il convient d'ouvrir chacun des moyens de verrouillage, ce qui s'avère nécessairement long et fastidieux.

Tel est également l'inconvénient du système décrit dans le brevet US 4 591 333, où une plaque peut venir recouvrir des ouvertures de passage d'air, pour provoquer une cuisson par radiation des produits, tandis que certaines de ces ouvertures peuvent être obturées au moyen de capuchons pour éviter la sortie d'air en certains endroits du four.

A cela il faut ajouter qu'il est également connu, par le document de brevet n° EP 1 368 595, un four de cuisson de produits de boulangerie, viennoiserie et similaires, de type four tunnel, comportant une sole pourvue de moyens de chauffage en sole notamment par convection et une voûte pourvue de moyens de chauffage alternativement par convection ou rayonnement.

Plus précisément, en voûte, s'étend un plenum dans lequel peut être mis en circulation un fluide caloporteur depuis une entrée et une sortie pour permettre à cette voûte d'assurer un chauffage par rayonnement dans l'enceinte de cuisson.

En outre, cette voûte est traversée verticalement de tubulures, ou manchons, s'étendant dans l'enceinte de cuisson. Au travers de certains de ces manchons, le fluide caloporteur peut être soufflé dans ladite enceinte pour assurer un chauffage par convection.

Un circuit de chauffage comportant des moyens de circulation de fluide caloporteur sous forme d'un ventilateur, par exemple, des moyens de chauffage de ce fluide caloporteur, tel qu'un brûleur à gaz, des circuits de circulations du fluide caloporteur équipés de vannes de contrôle permet, selon le cas :
- d'amener le fluide caloporteur sous la sole perméable, et/ou ;
- de faire circuler ce fluide caloporteur dans le plenum pour un chauffage par rayonnement en voûte, et/ou ;
- d'amener ce fluide caloporteur dans une chambre pour le soufflage de celui-ci dans l'enceinte de cuisson par l'intermédiaire des tubulures traversant le plenum.

A noter que des conduits de recyclage, communiquant avec la seconde partie des manchons, permettent d'aspirer, par l'intermédiaire du ventilateur, ce fluide caloporteur depuis l'enceinte de cuisson et/ou le plenum pour sa recirculation.

On comprend bien que, si un tel four est en mesure de proposer alternativement, en voûte, un chauffage par rayonnement ou convection, voire simultanément les deux, il présente l'inconvénient d'une conception complexe et encombrante en hauteur.

En effet, pour assurer un chauffage par convection, et alimenter en fluide caloporteur les tubulures traversant le plenum en voûte, au-dessus de ce plenum doit nécessairement s'étendre une chambre de distribution en fluide caloporteur desdites tubulures.

Par ailleurs, pour assurer un chauffage convectif plus ou moins uniforme en voûte, de nombreuses tubulures doivent ainsi traverser ce plenum, en créant à l'intérieur de ce dernier une résistance, et donc une perte de charge importante, à la circulation du fluide caloporteur dans ce plenum en cas de chauffage par rayonnement. Ceci est encore accentué par le fait que la moitié des tubulures est destinée à permettre une évacuation de l'air, aboutissant finalement à un chauffage et une cuisson non uniforme des produits en voûte.

La présente invention se veut à même de répondre à l'ensemble de ces inconvénients tout en conservant cette possibilité, pour l'usager, de sélectionner entre un mode de chauffage en voûte par convection et par rayonnement et, ainsi, d'adapter, au mieux, ce mode de chauffage aux contraintes de cuisson des produits à cuire ou à précuire.

A cet effet, l'invention concerne un module de cuisson pour produits de boulangerie, viennoiserie et similaires, comportant une enceinte de cuisson comprenant une voûte et une sole mobile ou statique sur laquelle viennent reposer lesdits produits, directement ou indirectement, au travers d'un support de cuisson adapté tel qu'une plaque, un filet, un moule de cuisson ou autre, ledit module étant encore équipé de moyens de chauffage en voûte, ces derniers comprenant un plenum dans lequel circule un fluide caloporteur depuis une entrée et au moins une sortie caractérisé par le fait que le plenum comporte une pluralité d'orifices de soufflage de fluide caloporteur dans l'enceinte de cuisson, ledit module comprenant encore :
- des moyens d'occultation desdits orifices de soufflage mobiles entre au moins deux positions, l'une d'occultation desdits orifices de soufflage, l'autre d'ouverture de ces derniers ;
- des moyens d'aspiration du fluide caloporteur traversant le plenum et/ou soufflé dans l'enceinte de cuisson ;
- éventuellement des moyens de gestion de l'aspiration du fluide caloporteur.

En particulier, lesdits moyens d'occultation consistent en des moyens de fermeture se présentant sous la forme d'une plaque dans laquelle sont ménagés des orifices selon une disposition concordant aux orifices de soufflage en sorte que, en position d'ouverture, ces orifices se situent au droit desdits orifices de soufflage pour un chauffage par convection des produits et que, en position d'occultation, lesdits orifices dans la plaque soient décalés par rapport auxdits orifices de soufflage, ladite plaque refermant ces derniers et conduisant à un chauffage par rayonnement desdits produits.

Les avantages découlant de la présente invention consistent en ce qu'au travers du plenum en voûte du four, ou module de four, selon l'invention, il est possible de sélectionner un mode de chauffage par rayonnement et/ou par convection en agissant sur de simple moyens d'occultation d'orifices de soufflage équipant ce plenum, voire, encore, sur des moyens d'aspiration de fluide caloporteur, ceci selon le mode de réalisation retenu comme cela apparaitra dans la description détaillée qui va suivre.

De manière essentielle, la présente invention permet de s'affranchir de la chambre de distribution s'étendant au-dessus du plenum, cette chambre étant indispensable dans la solution de l'état de la technique correspondant au document de brevet EP 1 368 595.

Le gain en hauteur et en simplification de conception est substantiel. Ce gain en hauteur présente un intérêt tout particulier dans le cas de conception de fours à étages.

La compréhension de la description sera facilitée en se référant aux dessins ci-joints dans lesquels :
- La figure 1 est une représentation schématisée, et en coupe transversale, d'un mode de réalisation particulier d'un module de cuisson selon l'invention, avec les moyens d'occultation en position d'ouverture ;
- La figure 2 est une représentation similaire à celle de la figure 1 avec moyens d'occultation en position de fermeture ;
- La figure 3 est similaire à la figure 1, c'est-à-dire avec les moyens d'occultation en position d'ouverture, selon un autre mode de réalisation de l'invention ;
- La figure 4 est une représentation similaire à la figure 3 avec les moyens d'occultation en position de fermeture.

Telle que représentée dans les figures des dessins ci-joints, la présente invention concerne un module de cuisson 1 de produits 2 de boulangerie, viennoiserie ou similaires, comportant une enceinte de cuisson 3 délimitée, en partie basse, par une sole 4 et en partie haute par une voûte 5

La sole 4 peut être du type fixe ou mobile et, dans ce dernier cas, ladite sole 4 peut, par exemple, se présenter sous la forme d'un tapis mobile évoluant selon un circuit bouclé entre une entrée et une sortie, non visibles sur les figures, du module de cuisson 1.

Sur cette sole 4 viennent reposer, directement ou indirectement, par l'intermédiaire d'un support adapté 6, tel qu'une plaque, un filet, un moule, ou similaires, les produits 2.

Si un tel module de cuisson 1 peut être avantageusement pourvu de moyens de chauffage par rayonnement ou par convection en sole 4, il comporte dans tous les cas, selon l'invention, des moyens de chauffage 7 en voûte 5 comprenant un plenum 8 s'étendant, préférentiellement, sur l'ensemble de la surface de la voûte 5.

A l'intérieur de ce plenum 8 est mis en circulation un fluide caloporteur 9, représenté par les flèches en grisé.

Selon l'invention, le plenum 8 comporte une pluralité d'orifices de soufflage 10 de fluide caloporteur 9 dans l'enceinte de cuisson 3.

Ces orifices de soufflage 10 sont, par conséquent, réalisés au niveau de la paroi inférieure 11 du plenum 8, en direction de cette enceinte de cuisson 3.

Par ailleurs, ce module de cuisson 1 selon l'invention comprend encore des moyens d'occultation 12 de ces orifices de soufflage 10, moyens d'occultation 12 mobiles entre au moins deux positions, l'une d'occultation 13 de ces orifices de soufflage 10, l'autre d'ouverture 14 de ces orifices 10.

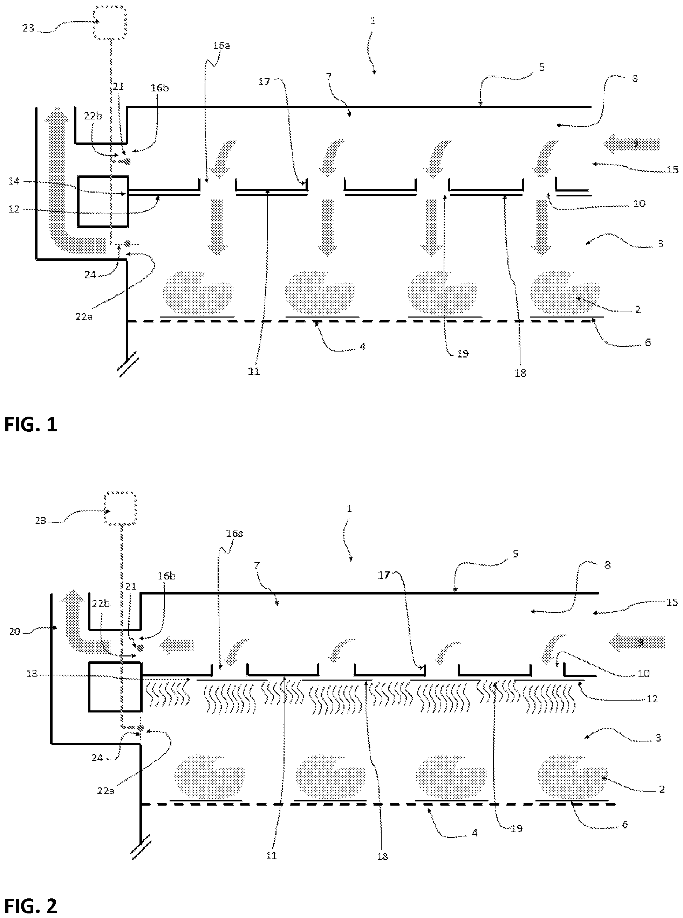

La position d'ouverture 14 des moyens d'occultation 12 est illustrée schématiquement sur la figure 1 jointe tandis que la position d'occultation 13 de ces mêmes moyens d'occultation 12 est visible sur la figure 2.

En somme, lorsque ces moyens d'occultation 12 sont dans la position d'occultation 13, le plenum 8 est traversé par le fluide caloporteur 9 depuis une entrée 15 vers au moins une sortie 16b ou 16 (dépendant du mode de réalisation comme cela apparaitra dans la suite de la description) de sorte que ce plenum 8 assure un chauffage essentiellement par rayonnement en voûte 5 de l'enceinte de cuisson 3.

Contrairement, lorsque lesdits moyens d'occultation 12 sont en position d'ouverture 14, le fluide caloporteur 9 traverse le plenum 8 depuis l'entrée 15 vers la sortie 16a ou 16 définie par les orifices de soufflage 10 pour assurer un chauffage par convection des produits 2 à cuire ou à précuire depuis la voûte 5.

A noter, au passage, que dans le cas d'un chauffage combiné par rayonnement et convection lesdits moyens d'occultation 12 peuvent occuper une position intermédiaire entre la position d'occultation 13 et la position d'ouverture 14.

A noter également qu'au niveau des orifices de soufflage 10, ceux-ci peuvent être équipés de guides 17 de flux caloporteur favorisant le guidage du flux convectif depuis la voûte 5 en direction desdits produits 2.

Dans la description qui va suivre, il est plus particulièrement fait référence, dans un premier temps, aux figures 1 et 2 des dessins ci-joints correspondant à un premier mode de réalisation de l'invention.

Dans le cadre de cet exemple de réalisation conforme à l'invention, les moyens d'occultation 12 sont plus particulièrement définis sous forme de moyens de fermeture des orifices de soufflage 10.

Selon un mode avantageux d'exécution, ces moyens d'occultation 12 se présentent sous forme d'une plaque 18 dans laquelle sont ménagés des orifices 19 selon une disposition concordant aux orifices de soufflage 10 pour, lorsque lesdits moyens d'occultation 12 sont en position d'ouverture 14, représentée sur la figure 1, ces orifices 19 dans la plaque 18 se situent au droit des orifices de soufflage 10 pour assurer un chauffage convectif depuis la voûte 5.

A l'inverse, en position d'occultation 13 des moyens d'occultation 12, illustrée schématiquement sur la figure 2, les orifices 19 dans la plaque 18 sont décalés par rapport aux orifices de soufflage 10, ladite plaque 18 refermant ces derniers et conduisant à un chauffage par rayonnement des produits 2.

A noter que, dans un tel mode de réalisation sous forme de moyen de fermeture des moyens d'occultation 12, le plenum 8 comporte une sortie de fluide 16b définie sous forme d'une embouchure d'aspiration 22b, ou conduit d'aspiration 22b, de fluide caloporteur 9 pénétrant dans le plenum 8 depuis l'entrée 15.

Le module de cuisson 1 comporte des moyens d'obturation 21 de la sortie 16b pour contraindre le fluide caloporteur 9 à traverser les orifices de soufflage 10, en mode convectif, lorsque les moyens d'occultation 12 sont en position d'ouverture 14, selon l'illustration de la figure 1.

Inversement, ces moyens d'obturation 21 de la sortie 16b sont amenés en position d'ouverture lorsque l'on est en mode de chauffage par rayonnement et que les moyens d'occultation 12 sont en position d'occultation 13, comme représenté sur la figure 2.

Dans ce mode de réalisation, ledit module de cuisson 1 comporte, par ailleurs, au moins un conduit d'aspiration 22a dans l'enceinte de cuisson 3 pour permettre l'aspiration et la recirculation du fluide caloporteur 9 insufflé, dans l'enceinte de cuisson 3 en mode de chauffage par convection depuis la voûte 5, par l'intermédiaire de la sortie 16a définie par les orifices de soufflage 10.

Ce conduit d'aspiration 22a est également équipé de moyens d'obturation 24, tout comme le conduit d'aspiration 22b.

Des moyens de gestion 23 adaptés équipent le module de cuisson 1 pour gérer, selon le cas, l'ouverture ou la fermeture des moyens d'obturation 24 du conduit d'aspiration 22a communiquant avec l'enceinte de cuisson 3 et des moyens d'obturation 21 du conduit d'aspiration 22b du plenum 8.

Ces moyens de gestion 23 assurent la recirculation du fluide caloporteur 9 traversant simplement le plenum 8 en mode rayonnement, c'est-à-dire les moyens d'occultation 12 en position d'occultation 13, ou injecté dans l'enceinte de cuisson 3 au travers des orifices de soufflage 10 que comporte ce plenum 8 en mode convectif, c'est-à-dire les moyens d'occultation 12 en position d'ouverture 14.

A ce propos, le module de cuisson 1 peut être pourvu de moyens de recirculation du fluide caloporteur 9 sous forme d'un ventilateur ou similaire pour, à la fois, aspirer ce fluide caloporteur 9 en provenance du plenum 8 et/ou de l'enceinte 3 de cuisson pour l'envoyer en direction de moyens de chauffage adaptés de type brûleurs, résistances ou autres, et le repousser, à nouveau, dans le plenum 8.

De tels moyens de recirculation sont connus de l'homme du métier.

A retenir toutefois que les moyens de gestion 23 peuvent moduler le fluide caloporteur 9 aspiré au travers de chacun de ces conduits d'aspiration 22a, 22b, dans le cas d'un chauffage combiné par rayonnement et convection, les moyens d'obturation respectivement 24, 21 étant tous deux amenés dans une position intermédiaire entre la position de fermeture et la position d'ouverture.

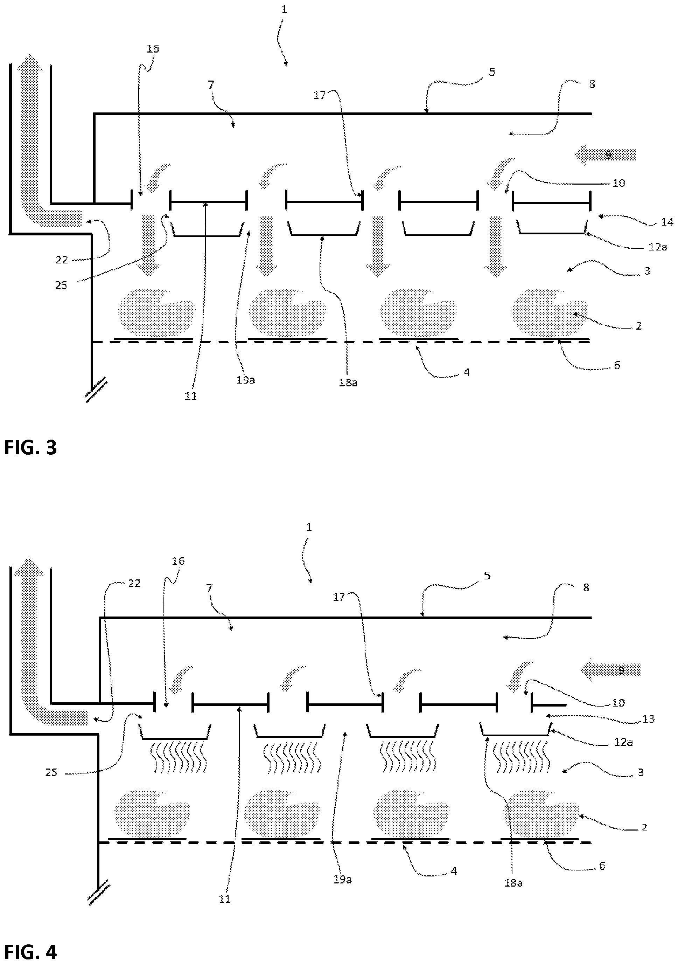

Le mode de réalisation illustré dans les figures 3 et 4 se distingue de celui qui vient d'être décrit notamment en ce que les moyens d'occultation 12 se présentent, en position d'occultation 13, sous forme d'écran de déviation 12a du flux de fluide caloporteur 9 soufflé dans l'enceinte de cuisson 3 par les orifices de soufflage 10. Ils sont illustrés en position d'ouverture 14 sur la figure 3 et en position d'occultation 13 sur la figure 4.

Dans ce mode de réalisation, la sortie 16 du fluide caloporteur du plenum 8 est constituée par les orifices 10.

Les moyens d'occultation sous forme d'écran 12a se situent sous ces orifices 10 et à une certaine distance de ces derniers.

Finalement, ces moyens d'occultation 12a, dans la position d'occultation 13, en formant écran sous le plenum 8, délimitent avec ce dernier un espace 25 avec lequel communique un conduit d'aspiration 22 permettant la recirculation du fluide caloporteur 9 en provenance des orifices de soufflage 10 et bloqué par les moyens d'occultation en forme d'écran 12a.

Avantageusement, ce conduit d'aspiration 22 communiquant également avec l'enceinte de cuisson 3, il contribue, par ailleurs, à la recirculation du fluide caloporteur 9, soufflé par les orifices de soufflage 10 dans l'enceinte de cuisson 3, lorsque lesdits moyens d'occultation 12a sont en position d'ouverture 14, comme représenté plus particulièrement sur la figure 3.

Pour en revenir auxdits moyens d'occultation formant écran 12a ceux-ci peuvent, là encore, se présenter sous forme d'une plaque 18a comportant, tout comme dans le mode de réalisation précédent, des orifices 19a susceptibles de coïncider avec les orifices de soufflage 10 dans le plenum 8.

De manière avantageuse, l'embouchure de ces orifices 19a dans la plaque 18a est de forme tronconique pour, en position d'occultation 13, refouler le fluide caloporteur 9 soufflé sur cette plaque 18a entre ces orifices 19a, en direction du plenum 8 et éviter qu'il ne gagne l'enceinte 3 de cuisson.

Dans cette position, représentée sur la figure 4, ce fluide caloporteur 9 chauffant la plaque 18a des moyens d'occultation en forme d'écran 12a contribue au chauffage de l'enceinte de cuisson 3 par rayonnement au travers de ladite plaque 18a.

La figure 3 illustre plus particulièrement la plaque 18a en position d'ouverture 14, les orifices 19a de ladite plaque 18a coïncidant avec les orifices de soufflage 10 dans le plenum 8.

De manière alternative, lorsque les orifices de soufflage 10 empruntent une disposition en rangées transversales ou longitudinales au niveau du plenum 8, les moyens d'occultation 12a formant écran peuvent être définis par des lames empruntant, plus particulièrement, la forme de gouttières aux bords longitudinaux relevés.

La taille et l'écartement de ces lames sont définis pour, selon le cas, dans la position d'occultation 13 représentée figure 4 s'étendre sous les rangées d'orifices de soufflage 10 dans le plenum 8 ou, au contraire, dans la position d'ouverture 14, visible figure 3, s'intercaler entre ces rangées d'orifices de soufflage 10 en préservant, sous ces dernières, une fente au travers de laquelle le fluide caloporteur 9 peut être insufflé dans l'enceinte de cuisson 3.

Tout comme pour les ouvertures de forme tronconique, les bords relevés de ces lames ont pour but, en position d'occultation 13 des moyens d'occultation formant écran 12a, de refouler le fluide caloporteur 9 dans l'espace 25.

La finalité est d'obtenir un chauffage en voûte 5 essentiellement par rayonnement desdites lames dans l'enceinte 3 de cuisson, dans la position d'occultation 13.

De manière avantageuse, comme évoqué précédemment, les orifices de soufflage 10 peuvent être équipés de guides de flux de fluide caloporteur 17

Ces guides 17, sous forme de tronçons de tubes peuvent s'étendre dans le plenum 8 dans le cas de moyens d'occultation 12 définissant des moyens de fermeture des orifices de soufflage 10 conformément au premier mode de réalisation décrit, en référence aux figures 1 et 2 des dessins ci-joints.

Contrairement, ces tronçons de tube définissant les guides de fluide caloporteur 17 peuvent s'étendre en tout ou partie sous le plenum 8 dans le cas de moyens d'occultation formant écran 12a.

Les figures 3 et 4 représentent schématiquement les guides de fluide caloporteur 17 sous forme de tronçons de tube s'étendant, en partie, dans le plenum 8 et, en partie, sous le plenum 8.

Cette seconde solution présente l'avantage d'une moindre perte de charge du fluide caloporteur 9 traversant le plenum 8.

A noter que de tels guides 17 de fluide caloporteur favorisent l'échange thermique avec la paroi inférieure 11 du plenum 8 qui en est équipé, pour un meilleur rendement de chauffage par rayonnement.

Il a été décrit, en référence aux figures 3 et 4, un mode de réalisation du module 1 ne comportant qu'un seul conduit d'aspiration 22 du fluide caloporteur communiquant avec l'enceinte de cuisson 3 du module mais aussi avec l'espace 25 entre le plenum 8 et les moyen d'occultation formant écran 12a.

Toutefois, un tel mode de réalisation n'est pas limitatif et, tout comme dans le mode de réalisation décrit en référence aux figures 1 et 2 on peut imaginer deux conduits d'aspiration, chacun équipé de moyens d'obturation respectifs, l'un des conduits communiquant avec l'enceinte de cuisson 3 et l'autre communiquant avec l'espace 25 entre le plenum 8 et les moyens d'occultation formant écran 12a.

Dans ce dernier cas, le module 1 comporte encore des moyens de gestion de l'aspiration du fluide caloporteur 9 agissant sur lesdits moyens d'obturation desdits conduits, pour, selon le cas :
- obturer le conduit d'aspiration communiquant avec l'espace 25 entre la plaque 18a formant écran et le plenum 8 lorsque les moyens d'occultation 12a sont en position d'ouverture 14 et ouvrir le conduit d'aspiration communiquant avec l'enceinte de cuisson 3 en cas de chauffage en voûte 5 par convection ;
- inversement, ouvrir le conduit d'aspiration communiquant avec l'espace 25 entre la plaque 18a formant écran et le plenum 8 lorsque les moyens d'occultation 12a sont en position d'occultation 13 et obturer le conduit d'aspiration communiquant avec l'enceinte de cuisson 3 en cas de chauffage en voûte 5 par rayonnement.

A retenir toutefois que, tout comme pour le premier mode de réalisation qui a été décrit, ces moyens de gestion peuvent moduler le fluide caloporteur aspiré au travers de chacun de ces conduit d'aspiration, dans le cas d'un chauffage combiné par rayonnement et convection, les moyens d'obturation étant amenés dans une position intermédiaire entre la position de fermeture et la position d'ouverture.

La présente invention concerne encore un four comportant au moins un module 1 selon l'invention.

De manière préférentielle, le four est de type four tunnel linéaire comportant plusieurs modules 1 juxtaposés traversé par une sole 4 sous forme d'un tapis mobile.

Ainsi, au niveau de chaque module 1 peut être sélectionné un chauffage, selon le cas, par rayonnement, par convection, ou mixte rayonnement/convection, de manière à ajuster au mieux ce chauffage aux conditions de cuisson requises des produits 2 au cours de leur cheminement dans le four.

## Revendications

1. Module de cuisson (1) pour produits (2) de boulangerie, viennoiserie et similaires, comportant une enceinte de cuisson (3) comprenant une voûte (5) et une sole (4), mobile ou statique, sur laquelle viennent reposer lesdits produits (2), directement ou indirectement, au travers d'un support (6) de cuisson adapté tel qu'une plaque, un filet, un moule de cuisson ou autre, ledit module (1) étant encore équipé au moins de moyens de chauffage (7) en voûte (5), ces derniers comprenant un plenum (8) dans lequel circule un fluide caloporteur (9) depuis une entrée (15) vers au moins une sortie (16a, 16b), le plenum (8) comportant une pluralité d'orifices de soufflage (10) de fluide caloporteur (9) dans l'enceinte de cuisson (3), ledit module (1) comprenant encore, au moins :
- des moyens d'occultation (12) desdits orifices de soufflage (10) mobiles entre au moins deux positions (13, 14), l'une d'occultation (13) desdits orifices de soufflage (10), l'autre d'ouverture (14) de ces derniers ;
- des moyens d'aspiration (22a, 22b) du fluide caloporteur (9) traversant le plenum (8) et/ou soufflé dans l'enceinte de cuisson (3),
lesdits moyens d'occultation (12) consistant en des moyens de fermeture se présentant sous la forme d'une plaque (18) dans laquelle sont ménagés des orifices (19) selon une disposition concordant aux orifices de soufflage (10) en sorte que, en position d'ouverture (14), ces orifices (19) se situent au droit desdits orifices de soufflage (10) pour un chauffage par convection des produits (2) et que, en position d'occultation (13), lesdits orifices (19) dans la plaque (18) soient décalés par rapport auxdits orifices de soufflage (10), ladite plaque (18) refermant ces derniers et conduisant à un chauffage par rayonnement desdits produits (2), ledit module de cuisson (1) étant **caractérisé par le fait que** ledit plenum (8) comporte, d'une part, une première sortie (16a) du fluide caloporteur (9) définie par les orifices de soufflage (10), et une seconde sortie (16b) en communication avec un conduit d'aspiration (22b), ledit module comportant encore au moins un conduit d'aspiration (22a) en communication avec ladite enceinte (3), lesdits conduits d'aspiration (22a, 22b) étant équipés chacun de moyens d'obturation respectifs (24, 21) aptes à passer au moins d'une position d'ouverture à une position de fermeture, les moyens d'obturation (24) de la sortie d'aspiration (22a) étant en position d'ouverture, respectivement de fermeture, lorsque lesdits moyens d'occultation (12) sont en position d'ouverture (14), respectivement en position d'occultation (13), tandis que les moyens d'obturation (21) de la sortie d'aspiration (22b) sont en position d'ouverture, respectivement de fermeture, lorsque lesdits moyens d'occultation (12) sont en position d'occultation (13), respectivement en position d'ouverture (14).

2. Module de cuisson (1) selon la revendication précédente **caractérisé par le fait qu'**il comporte encore des moyens de gestion (23) de l'aspiration du fluide caloporteur (9) aptes à gérer, selon le cas, l'ouverture ou la fermeture des moyens d'obturation (24, 21) des conduits d'aspiration (22a, 22b).

3. Module de cuisson (1) pour produits (2) de boulangerie, viennoiserie et similaires, comportant une enceinte de cuisson (3) comprenant une voûte (5) et une sole (4), mobile ou statique, sur laquelle viennent reposer lesdits produits (2), directement ou indirectement, au travers d'un support (6) de cuisson adapté tel qu'une plaque, un filet, un moule de cuisson ou autre, ledit module (1) étant encore équipé au moins de moyens de chauffage (7) en voûte (5), ces derniers comprenant un plenum (8) dans lequel circule un fluide caloporteur (9) depuis une entrée (15) vers une sortie (16), le plenum (8) comportant une pluralité d'orifices de soufflage (10) de fluide caloporteur (9) dans l'enceinte de cuisson (3), ledit module (1) comprenant encore, au moins :
- des moyens d'occultation (12) desdits orifices de soufflage (10) mobiles entre au moins deux positions (13, 14), l'une d'occultation (13) desdits orifices de soufflage (10), l'autre d'ouverture (14) de ces derniers ;
- des moyens d'aspiration (22) du fluide caloporteur (9) traversant le plenum (8) et/ou soufflé dans l'enceinte de cuisson (3),
lesdits moyens d'occultation (12) se présentant, en position d'occultation (13), sous forme d'écran de déviation (12a) du fluide caloporteur (9), ledit module de cuisson étant **caractérisé par le fait que** le plenum (8) comporte une sortie (16) définie par les orifices de soufflage (10), lesdits moyens d'occultation sous forme d'écran (12a) définissant un espace (25) sous le plenum (8) avec lequel communique un conduit d'aspiration unique (22) pour la recirculation du fluide caloporteur (9) en provenance des orifices de soufflage (10) et bloqué par lesdits moyens d'occultation (12a) en position d'occultation (13), ledit conduit d'aspiration (22) communiquant également avec l'enceinte de cuisson (3).

4. Module de cuisson (1) selon la revendication 3 **caractérisé par le fait que** lesdits moyens d'occultation formant écran (12a) se présentent sous la forme d'une plaque (18a) comportant des orifices (19a) selon une disposition concordant aux orifices de soufflage (10) en sorte que, en position d'ouverture (14), ces orifices (19a) se situent au droit desdits orifices de soufflage (10) pour un chauffage par convection des produits (2) et que, en position d'occultation (13), lesdits orifices (19a) soient décalés par rapport auxdits orifices de soufflage (10), ladite plaque (18), refermant ces derniers et conduisant à un chauffage par rayonnement desdits produits (2).

5. Module de cuisson (1) selon la revendication précédente **caractérisé par le fait que** l'embouchure des orifices (19a) est de forme tronconique pour, en position d'occultation (13), refouler le fluide caloporteur (9) soufflé sur cette plaque (18a) entre ces orifices (19a), en direction du plenum (8) et éviter qu'il ne gagne l'enceinte (3) de cuisson.

6. Module de cuisson (1) selon l'une quelconque des revendications 3 à 5 **caractérisé par le fait que**, au niveau du plenum (8), lesdits orifices de soufflage (10) empruntent une disposition en rangées transversales ou longitudinales, lesdits moyens d'occultation formant écran (12a) étant définis par des lames dont la taille et l'écartement sont définis pour s'étendre sous lesdites rangées d'orifices (10) dans la position d'occultation (13) et s'intercaler entre ces rangées d'orifices (10) dans la position d'ouverture (14).

7. Module de cuisson (1) selon l'une quelconque des revendications précédentes **caractérisé par le fait que** lesdits orifices de soufflage (10) sont équipés de guides (17) du fluide caloporteur (9) favorisant le guidage du flux convectif depuis la voûte (5) en direction des produits (2), lesdits guides (17) se présentant sous forme de tronçons de tubes s'étendant, selon le cas, dans le plenum (8) ou tout ou partie sous le plenum (8).

8. Four comportant au moins un module (1) selon l'une quelconque des revendications précédentes.

9. Four tunnel linéaire de cuisson comportant plusieurs modules (1), selon l'une quelconque des revendications 1 à 7, juxtaposés.

## Patentansprüche

1. Backmodul (1) für Backwaren, feine Backwaren und ähnliche Produkte (2), umfassend eine Backkammer (3), die ein Gewölbe (5) und einen beweglichen oder statischen Herd (4) umfasst, auf dem die besagten Produkte (2) direkt oder indirekt über einen geeigneten Backgutträger (6), wie eine Platte, ein Netz, eine Backform oder dergleichen, ruhen, wobei das besagte Modul (1) auch mit mindestens Heizmitteln (7) im Gewölbe (5) ausgestattet ist, wobei letztere eine Sammelkammer (8) umfassen, in der ein Wärmeübertragungsfluid (9) von einem Einlass (15) zu mindestens einem Auslass (16a, 16b) strömt, wobei die Sammelkammer (8) eine Vielzahl von Öffnungen zum Blasen (10) des Wärmeübertragungsfluids (9) in die Backkammer (3) umfasst, wobei das besagte Modul (1) auch mindestens Folgendes umfasst:
- Mittel zum Verdecken (12) der besagten Blasöffnungen (10), die zwischen mindestens zwei Positionen (13, 14), der einen zum Verdecken (13) der besagten Blasöffnungen (10), der anderen zum Öffnen (14) der letzteren, beweglich sind;
- Mittel zum Ansaugen (22a, 22b) des Wärmeübertragungsfluids (9), das durch die Sammelkammer (8) hindurchströmt und/oder in die Backkammer (3) geblasen wird,
wobei die besagten Verdeckungsmittel (12) aus Verschlussmitteln bestehen, die als eine Platte (18) ausgestaltet sind, in der Öffnungen (19) in einer mit den Blasöffnungen (10) übereinstimmenden Anordnung vorgesehen sind, sodass sich diese Öffnungen (19) in der offenen Position (14) gegenüber den besagten Blasöffnungen (10) befinden, um die Produkte (2) durch Konvektion zu erwärmen, und dass die besagten Öffnungen (19) in der Platte (18) in der Verdeckungsposition (13) bezüglich der besagten Blasöffnungen (10) versetzt sind, wobei die besagte Platte (18) letztere verschließt und zu einer Strahlungserwärmung der besagten Produkte (2) führt, wobei das besagte Backmodul (1) **dadurch gekennzeichnet ist, dass** die besagte Sammelkammer (8) einerseits, einen ersten Auslass (16a) für das Wärmeübertragungsfluid (9), der durch die Blasöffnungen (10) definiert ist, und einen zweiten Auslass (16b) in Verbindung mit einem Saugkanal (22b) umfasst, wobei das besagte Modul auch mindestens einen Saugkanal (22a) in Verbindung mit der besagten Kammer (3) umfasst, wobei die besagten Saugkanäle (22a, 22b) jeweils mit jeweiligen Verschlussmitteln (24, 21) versehen sind, die in der Lage sind, zumindest von einer offenen Position in eine geschlossene Position zu fahren, wobei sich die Mittel zum Verschließen (24) des Saugauslasses (22a) in der offenen Position, bzw. in der geschlossenen Position befinden, wenn sich die besagten Verdeckungsmittel (12) in der offenen Position (14), bzw. in der Verdeckungsposition (13) befinden, während sich die Mittel zum Verschließen (21) des Saugauslasses (22b) in der offenen Position, bzw. in der geschlossenen Position befinden, wenn sich die besagten Verdeckungsmittel (12) in der Verdeckungsposition (13), bzw. in der offenen Position (14) befinden.

2. Backmodul (1) nach dem vorhergehenden Anspruch, **dadurch gekennzeichnet, dass** es auch Mittel zum Verwalten (23) des Ansaugens des Wärmeübertragungsfluids (9) umfasst, die in der Lage sind, je nach dem Fall das Öffnen oder das Schließen der Mittel zum Verschließen (24, 21) der Saugkanäle (22a, 22b) zu verwalten.

3. Backmodul (1) für Backwaren, feine Backwaren und ähnliche Produkte (2), umfassend eine Backkammer (3), die ein Gewölbe (5) und einen beweglichen oder statischen Herd (4) umfasst, auf dem die besagten Produkte (2) direkt oder indirekt über einen geeigneten Backgutträger (6), wie eine Platte, ein Netz, eine Backform oder dergleichen, ruhen, wobei das besagte Modul (1) auch mit mindestens Heizmitteln (7) im Gewölbe (5) ausgestattet ist, wobei letztere eine Sammelkammer (8) umfassen, in der ein Wärmeübertragungsfluid (9) von einem Einlass (15) zu einem Auslass (16) strömt, wobei die Sammelkammer (8) eine Vielzahl von Öffnungen zum Blasen (10) des Wärmeübertragungsfluids (9) in die Backkammer (3) umfasst, wobei das besagte Modul (1) auch mindestens Folgendes umfasst:
- Mittel zum Verdecken (12) der besagten Blasöffnungen (10), die zwischen mindestens zwei Positionen (13, 14), der einen zum Verdecken (13) der besagten Blasöffnungen (10), der anderen zum Öffnen (14) der letzteren, beweglich sind;
- Mittel zum Ansaugen (22a, 22b) des Wärmeübertragungsfluids (9), das durch die Sammelkammer (8) hindurchströmt und/oder in die Backkammer (3) geblasen wird,
wobei die besagten Verdeckungsmittel (12) in der Verdeckungsposition (13) als ein Schirm zum Ablenken (12a) des Wärmeübertragungsfluids (9) ausgestaltet sind, wobei das besagte Backmodul **dadurch gekennzeichnet ist, dass** die Sammelkammer (8) einen durch die Blasöffnungen (10) definierten Auslass (16) umfasst, wobei die besagten, als ein Schirm (12a) ausgestalteten Verdeckungsmittel einen Raum (25) unter der Sammelkammer (8) definieren, mit dem ein einzelner Ansaugkanal (22) für die Zurückströmung des aus den Blasöffnungen (10) kommenden und durch die besagten Verdeckungsmittel (12a) in der Verdeckungsposition (13) gesperrten Wärmeübertragungsfluids (9) in Verbindung steht, wobei der besagte Ansaugkanal (22) auch mit der Backkammer (3) in Verbindung steht.

4. Backmodul (1) nach Anspruch 3, **dadurch gekennzeichnet, dass** die besagten, ein Schirm (12a) bildenden Verdeckungsmittel als eine Platte (18a) ausgestaltet sind, die Öffnungen (19a) in einer mit den Blasöffnungen (10) übereinstimmenden Anordnung umfasst, so dass sich diese Öffnungen (19a) in der offenen Position (14) gegenüber den besagten Blasöffnungen (10) befinden, um die Produkte (2) durch Konvektion zu erwärmen, und dass die besagten Öffnungen (19a) in der Verdeckungsposition (13) bezüglich der besagten Blasöffnungen (10) versetzt sind, wobei die besagte Platte (18) letztere verschließt und zu einer Strahlungserwärmung der besagten Produkte (2) führt.

5. Backmodul (1) nach dem vorhergehenden Anspruch, **dadurch gekennzeichnet, dass** die Mündung der Öffnungen (19a) kegelstumpfförmig ist, um das auf diese Platte (18a) geblasene Wärmeträgerflüssigkeit (9) in der Verdeckungsposition (13) zwischen diesen Öffnungen (19a) in Richtung auf die Sammelkammer (8) zu verdrängen, und um zu verhindern, dass es in die Backkammer (3) gelangt.

6. Backmodul (1) nach irgendeinem der Ansprüche 3 bis 5, **dadurch gekennzeichnet, dass** die besagten Blasöffnungen (10) im Bereich der Sammelkammer (8) eine Anordnung in Quer- oder Längsreihen annehmen, wobei die besagten ein Schirm (12a) bildenden Verdeckungsmittel durch Klingen definiert sind, deren Größe und Abstand zu einander so definiert sind, dass sie sich in der Verdeckungsposition (13) unter den besagten Reihen von Öffnungen (10) erstrecken, und sie sich in der offenen Position (14) zwischen diesen Reihen von Öffnungen (10) einfügen.

7. Backmodul (1) nach irgendeinem der vorhergehenden Ansprüche, **dadurch gekennzeichnet, dass** die besagten Blasöffnungen (10) mit Führungen (17) für das Wärmeübertragungsfluid (9) ausgestattet sind, die die Führung der Konvektionsströmung vom Gewölbe (5) in Richtung auf die Produkte (2) fördern, wobei die besagten Führungen (17) als Rohrabschnitten ausgestaltet sind, die sich je nach dem Fall in der Sammelkammer (8) oder alle oder ein Teil derselben unterhalb der Sammelkammer (8) erstrecken.

8. Backofen, umfassend mindestens ein Modul (1) nach irgendeinem der vorhergehenden Ansprüche.

9. Linear-Backtunnelofen, umfassend mehrere, nebeneinander angeordnete Module (1) nach irgendeinem der Ansprüche 1 bis 7.

## Claims

1. Baking module (1) for bakery, Viennese pastry and similar products (2), including a baking chamber (3) comprising a roof (5) and a movable or static hearth (4) on which the said products (2) directly or indirectly rest through a suitable baking support (6) such as a plate, a net, a baking mold or the like, said module (1) being also provided at least with heating means (7) at the roof (5), the latter comprising a plenum (8) in which a heat-transfer fluid (9) circulates from an inlet (15) to at least one outlet (16a, 16b), the plenum (8) including a plurality of orifices for blowing (10) heat-transfer fluid (9) into the baking chamber (3), said module (1) also comprising at least:
- means (12) for concealing said blowing orifices (10) movable between at least two positions (13, 14), one for concealing (13) said blowing orifices (10), the other one for opening (14) the latter;
- means for sucking (22a, 22b) the heat-transfer fluid (9) passing through the plenum (8) and/or blown into the baking chamber (3),
said concealment means (12) consist of closing means in the form of a plate (18) in which orifices (19) are formed in an arrangement consistent with the blowing orifices (10), so that, in the open position (14), these orifices (19) are located in front of said blowing orifices (10) for a convection heating of the products (2) and so that, in the concealment position (13), said orifices (19) in the plate (18) are offset with respect to said blowing orifices (10), said plate (18) closing the latter and leading to a radiation heating of said products (2), said baking module (1) being **characterized in that** said plenum (8) includes, on the one hand, a first outlet (16a) for the heat-transfer fluid (9) defined by the blowing orifices (10), and a second outlet (16b) in communication with a suction duct (22b), said module also including at least one suction duct (22a) in communication with said chamber (3), said suction ducts (22a, 22b) being each provided with respective closing means (24, 21) capable of passing at least from an open position to a closed position, the means for closing (24) the suction outlet (22a) being in the open position, respectively in the closed position, when said concealment means (12) are in the open position (14), respectively in the concealment position (13), while the means for closing (21) the suction outlet (22b) are in the open position, respectively in the closed position, when said concealment means (12) are in the concealment position (13), respectively in the open position (14).

2. Baking module (1) according to the preceding claim, wherein it also includes means for managing (23) the suction of the heat-transfer fluid (9) capable of managing, as the case may be, the opening or the closing of the means for closing (24, 21) the suction ducts (22a, 22b).

3. Baking module (1) for bakery, Viennese pastry and the like products (2), including a baking chamber (3) comprising a roof (5) and a movable or static hearth (4) on which the said products (2) directly or indirectly rest through a suitable baking support (6) such as a plate, a net, a baking mold or the like, said module (1) being also provided at least with heating means (7) at the roof (5), the latter comprising a plenum (8) in which a heat-transfer fluid (9) circulates from an inlet (15) to an outlet (16), the plenum (8) including a plurality of orifices for blowing (10) heat-transfer fluid (9) into the baking chamber (3), said module (1) also comprising at least:
- means (12) for concealing said blowing orifices (10) movable between at least two positions (13, 14), one for concealing (13) said blowing orifices (10), the other one for opening (14) the latter;
- means for sucking (22) the heat-transfer fluid (9) passing through the plenum (8) and/or blown into the baking chamber (3),
said concealment means (12) being, in the concealment position (13), in the form of a screen for deviating (12a) the heat-transfer fluid (9), said baking module being **characterized in that** the plenum (8) includes an outlet (16) defined by the blowing orifices (10), said concealment means in the form of a screen (12a) defining a space (25) under the plenum (8), which a single suction duct (22) for the recirculation of the heat-transfer fluid (9) coming from the blowing orifices (10) and blocked by said concealment means (12a) in the concealment position (13) communicates with, said suction duct (22) also communicating with the baking chamber (3).

4. Baking module (1) according to claim 3, wherein said concealment means forming a screen (12a) are in the form of a plate (18a) including orifices (19a) in an arrangement consistent with the blowing orifices (10) so that, in the open position (14), these orifices (19a) are located in front of said blowing orifices (10) for a convection heating of the products (2) and that, in the concealment position (13), said orifices (19a) are offset with respect to said blowing orifices (10), said plate (18) closing the latter and leading to a radiation heating of said products (2).

5. Baking module (1) according to the preceding claim, wherein the mouth of the orifices (19a) has a truncated conical shape in order, in the concealment position (13), to discharge the heat-transfer fluid (9) blown onto this plate (18a) between these orifices (19a) towards the plenum (8) and to prevent it from reaching the baking chamber (3).

6. Baking module (1) according to any one of claims 3 to 5, wherein, at the level of the plenum (8), said blowing openings (10) adopt an arrangement in transverse or longitudinal rows, said concealment means forming a screen (12a) being defined by blades the size of which and the distance between which are defined so as to extend under said rows of orifices (10) in the concealment position (13) and to be interposed between these rows of orifices (10) in the open position (14).

7. Baking module (1) according to any one of the preceding claims, wherein said blowing orifices (10) are provided with guides (17) for the heat-transfer fluid (9) promoting the guiding of the convective flow from the roof (5) towards the products (2), said guides (17) being in the form of tube pieces extending, as the case may be, into the plenum (8) or all or part of them under the plenum (8).

8. Oven including at least one module (1) according to any one of the preceding claims.

9. Linear baking tunnel oven including several juxtaposed modules (1) according to any one of claims 1 to 7.
